# EUROPÄISCHE PATENTSCHRIFT

(11) **EP 0 872 578 B1**
(45) Veröffentlichungstag und Bekanntmachung des Hinweises auf die Patenterteilung: **16.10.2002**
(21) Anmeldenummer: 98105907.4
(22) Anmeldetag: 01.04.1998
(51) Int. Cl.: C25B 9/00, C25B 15/08, H01M 8/24

(54) **Elektrochemische Halbzelle**
Electrochemical half-cell
Demi-cellule électrochimique

(30) Priorität: 14.04.1997 DE 19715429
(43) Veröffentlichungstag der Anmeldung: 21.10.1998
(73) Patentinhaber: BAYER AG, 51368 Leverkusen (DE)
(72) Erfinder: Gestermann, Fritz, Dr., 51377 Leverkusen (DE); Pinter, Hans-Dieter, 42929 Wermelskirchen (DE); Metzger, Karl-Ludwig, Dr., 51427 Bergisch Gladbach (DE); Herold, Heiko, 41470 Neuss (DE)

(56) Entgegenhaltungen:
- EP-A- 0 150 017
- EP-A- 0 717 130

## Beschreibung

Die Erfindung betrifft eine elektrochemische Halbzelle mit einer Gasdiffusionselektrode als Kathode oder Anode, bei der der Elektrodenraum der Halbzelle in gegebenenfalls aufwärts durchströmte Abteile aufgeteilt ist, die zur Durchleitung des Elektrolyten kaskadenartig über Fallschächte miteinander verbunden sind. und bei der der Gasraum insbesondere in zwei oder mehrere übereinanderliegende Gastaschen aufgeteilt ist

Der Betrieb von elektrochemischen Zellen auf Basis von Gasdiffusionselektroden, z.B. für die Anwendung als Sauerstoffverzehrkathode bei der Alkalihalogenid-Elektrolyse, ist grundsätzlich bekannt und z.B. beschrieben in der Patentschrift US 4 657 651.

Die Gasdiffusionselektrode ist eine offenporige Struktur zwischen Elektrolyt und Gasraum, die eine elektrisch leitende Schicht mit Katalysator aufweist, und es erlauben soll eine elektrochemische Reaktion, z.B. Reduktion von Sauerstoff, an der Dreiphasengrenze von Elektrolyt, Katalysator und Reaktantgas in der Elektrodenstruktur zu betreiben. Die Grenzschicht wird im allgemeinen durch die Oberflächenspannung des Elektrolyten auf dem hydrophoben Elektrodenmaterial entgegen dem hydrostatischen Druck des Elektrolyten auf die Elektrodenstruktur in der Struktur gehalten. Dabei ist jedoch nur ein geringes Druckgefälle zwischen Gasseite und Flüssigkeitsseite der wie eine Membran wirkende Struktur zulässig. Ist der gasseitige Druck zu hoch, so bricht schließlich das Gas durch die Membran durch und die Elektrode wird in diesem Bereich in ihrer Funktion gestört und der Elektrolysevorgang wird unterbrochen. Ist andererseits der Flüssigkeitsdruck zu hoch, so wird die Dreiphasengrenze aus dem den Katalysator enthaltenden Bereich in der Membran gedrückt, was die Funktion der Kathode ebenfalls stört und bei weiterer Druckerhöhung zu einem Flüssigkeitsdurchbruch von Elektrolyt in den Gasraum führt. Bei senkrechter Elektrodenanordnung, wie sie z.B. bei Membranelektrolysen notwendig ist, um das Zielprodukt Chlor günstig abführen zu können, führt dies zu einer Begrenzung der Bauhöhe der Gasdiffusionselektroden, da sonst oben Gas an der Elektrode in den Kathodenraum sowie unten Elektrolyt-Flüssigkeit in den Gasraum durchdrückt. Die technisch realisierbare Bauhöhe bleibt deshalb auf ca. 20-30 cm beschränkt, was für die marktüblichen Membranelektrolyseure unattraktiv ist.

Zur Lösung des Problems der Druckkompensation sind verschiedene Anordnungen im Stand der Technik vorgeschlagen worden.

Nach der Patentschrift US 4 657 651 wird ein Druckausgleich zwischen dem Gasraum und dem Elektrolytraum zu beiden Seiten einer Gasdiffusionskathode dadurch erziehlt, daß die Kathode in einzelne horizontale Kammern unterteilt wird, die individuell mit Gas beaufschlagt werden, wobei der Gasdruck durch Tauchung des jeweils abgehenden Gasstromes in vertikale Kammern dadurch geregelt ist, daß deren Tiefe der Elektrolythöhe über der jeweiligen Kammer entspricht. Nachteilig ist hier der hohe apparative Aufwand, der einer technischen Realisierung im Wege steht. Der Druck in jeder einzelnen Gaskammer soll hier nämlich separat eingestellt werden, über jeweilige Ventile.

Die deutsche Patentschrift DE 4 444 114 C2 beschreibt eine elektrochemische Halbzelle mit Gasdiffusionselektrode, bei der eine Druckkompensation zwischen dem Gasraum und dem Elektrolytraum zu beiden Seiten einer Gasdiffusionselektrode dadurch erreicht wird, daß der Gasraum in zwei oder mehrere kaskadenartig übereinanderliegende Gastaschen aufgeteilt ist, die voneinander getrennt sind und zum Elektrolyten nach unten hin offen sind, so daß der Druck in jeder Gastasche über die Öffnung zum Elektrolyten im Gleichgewicht zum Druck der Flüssigkeitssäule des Elektrolyten im entsprechenden Teil des vor der Gasdiffusionselektrode liegenden Elektrodenraums steht, und bei denen eine eventuelle Gaszu- bzw. Gasabfuhr über die Öffnungen zum Elektrolyten erfolgt.

Die bekannten Elektrolysezellkonstruktionen weisen jedoch noch eine Reihe von technischen Nachteilen auf.

Insbesondere bei Elektrolysezellen mit größerer Bauhöhe gilt es den hydrostatischen Druck auf den unteren Teil der Gasdiffusionselektrode zu vermeiden. Als nachteilig erweist sich bei der Halbzellenkonstruktion gemäß der Schrift DE 4 444 144 auch, daß sich eventuell mit dem Elektrolyten mitgeführte Gasblasen im Bereich des Elektrolytspaltes vor der Gasdiffusionselektrode beim Betrieb der Zelle ansammeln und den Betrieb der Zelle stören können.

Es galt darüber hinaus den Nachteil zu vermeiden, den Gasdruck nicht unabhängig von den einmal festgelegten konstruktiven Gegebenenheiten in der Zelle, wie er z.B. mit DE 4 444 144 besteht, regeln zu können. Vielmehr sollte der Gasdruck auch während des Betriebes unabhängig vom Elektrolytdruck eingestellt und gegebenenfalls gegenüber einem auch über die Zellhöhe unabhängigen Elektrolytdruck verändert werden können.

Die von dem oben genannten Stand der Technik ausgehende Aufgabe der Erfindung besteht darin, eine elektrochemische Halbzelle auf Basis einer Gasdiffusionselektrode bereitzustellen, die eine Druckkompensation zwischen Gas- und Elektrolytseite der Gasdiffüsionselektrode ermöglicht aber nicht die genannten Nachteile der bekannten Zellkonstruktionen aufweist. Insbesondere soll die neue Zellkonstruktion eine möglichst flache Bauweise der Halbzelle ermöglichen.

Die Aufgabe wird erfindungsgemäß durch eine elektrochemische Halbzelle auf Basis einer Gasdiffusionselektrode als Kathode oder Anode gelöst, bei der der Elektrodenraum der Halbzelle in Abteile aufgeteilt ist, die zur Durchleitung des Elektrolyten kaskadenartig über Fallschächte miteinander verbunden sind.

Gegenstand der Erfindung ist eine elektrochemische Halbzelle bestehend aus einem Elektrodenraum zur Aufnahme eines Elektrolyten, einem Gasraum, und mindestens einer Gasraum und Elektrodenraum trennenden Gasdiffusionselektrode als Kathode oder Anode, wobei der Gasraum gegebenenfalls insbesondere in zwei oder mehrere übereinanderliegende Gastaschen aufgeteilt ist, dadurch gekennzeichnet, daß der Elektrodenraum in Abteile aufgeteilt ist, die zur Durchleitung des Elektrolyten kaskadenartig über Fallschächte miteinander verbunden sind, wobei die Elektrodenräume insbesondere jeweils aufwärts durchströmt sind.

Die Abteile weisen insbesondere in dem Bereich des Abteilbodens Eintrittsöffnungen für den Elektrolyten auf, die für eine Durchströmung des jeweiligen Abteiles mit Elektrolyt von unten nach oben sorgen. Insbesondere bevorzugt sind die Öffnungen über den Abteilboden verteilt im Abteilboden angebracht

Der Elektrolytzulauf zur elektrochemischen Halbzelle ist bevorzugt am obersten Abteil der Halbzelle angebracht, so daß der Elektrolyt die Reihe der mit einander verbundenen Abteile beginnend mit dem obersten Abteil durchströmt.

Der Gasraum der Halbzelle ist bevorzugt in mehrere, insbesondere der Zahl der Abteile entsprechende Zahl übereinander liegender Gastaschen aufgeteilt.

Gegenstand der Erfindung ist auch eine elektrochemische Halbzelle bestehend aus einem Elektrodenraum zur Aufnahme eines Elektrolyten, einem Gasraum, und mindestens einer Gasraum und Elektrodenraum trennenden Gasdiffüsionselektrode als Kathode oder Anode, wobei der Gasraum in zwei oder mehrere übereinanderliegende Gastaschen aufgeteilt ist, dadurch gekennzeichnet, daß die Gastaschen zur Einstellung eines dem Druck vor der Gasdiffusionselektrode entsprechenden Differenzdrucks über Drosselbohrungen mit einander verbunden sind, und die Gaszuleitung an der untersten Gastasche angebracht ist.

In einer bevorzugten Variante wird die Aufteilung des Gasraumes der elektrochemischen Halbzelle in Gastaschen auch mit der erfindungsgemäßen Ausführung der Halbzelle mit Aufteilung des Elektrodenraumes in Abteile verbunden.

Bei der erfindungsgemäßen elektrochemischen Halbzelle mit übereinanderliegenden Abteilen im Elektrolytspalt und einem durchgehenden Gasraum, werden die Abteile nacheinander nach dem Überlaufprinzip bespeist und jeweils von unten nach oben durchströmt, so daß ein hydrostatischer Druckaufbau im jeweiligen Abteil nur entsprechend der Höhe der jeweiligen Elektrolytsäule begrenzt bleibt. Durch die Aufwärtsströmung wird bei der Halbzelle mit Elektrolyteinlaß im Bereich des Abteilbodens ein Hängenbleiben eventuell mitgeführter Gasblasen im Elektrolytspalt vermieden. Die Druckverhältnisse in den einzelnen übereinanderliegenden Stufen sind im Prinzip gleich, so daß eine beliebige technische Bauhöhe realisiert werden kann, ohne daß auf dem unteren Teil der Gasdiffusionselektrode ein höherer Druck als im oberen Teil lastet. Das Reaktionsgas, z.B. Sauerstoff, kann deshalb jenseits der in die Kaskadenstufen eingelassenen Gasdiffusionselektroden über einen einzigen Gasraum, der in einzelne miteinander gasseitig verbundene Gastaschen unterteilt sein kann, angeboten werden. Der Differenzdruck zwischen Gas und Elektrolyt ist dabei frei wählbar. Der Kathodenraum kann hierdurch extrem flach gestaltet werden. Es ist z.B. denkbar, die gesamte Dicke der Zelle auf etwa 2/3 der Dicke der bekannten Elektrolysehalbzellen zu bringen. Ein Elektrolyseur mit einer Vielzahl von Membranzellen kann dann mit 1/3 mehr Elementen bestückt werden und unter Berücksichtigung einer Betriebsspannungsverminderung um 1/3 mit derselben Gesamtspannung wie ein klassischer Membranelektrolyseur betrieben werden.

Die Funktionsweise der elektrochemischen Halbzelle mit Druckkompensation über mit Drosselelementen verbundene Gastaschen läßt sich wie folgt beschreiben:

Bei der Ausführung mit durchgehendem Elektrodenraum wird das Reaktionsgas durch kaskadenartig übereinanderliegende, nur über Drosselelemente (z.B. Drosselbohrungen) verbundene Gastaschen, beginnend mit der untersten Gastasche, derart eingespeist, daß der über die Drosselung sich jeweils einstellende, nach oben hin abnehmende Gasdruck etwa dem entsprechenden Elektrolytdruck vor der Gasdiffusionselektrode entspricht. Die Elektrolytströmung verläuft auch bei dieser Variante von unten nach oben, um ein Hängenbleiben evtl. zufällig eingespeister Gasblasen im Elektrodenraum zu vermeiden. Der Reaktionsgas-Vordruck enstpricht etwa dem Druck, mit dem der Elektrolyt in die Zelle unten eingespeist wird und läßt sich gegebenenfalls über eine Tauchung oder einen Windkessel jeweils in Verbindung mit dem Elektrolyten an dieser Stelle leicht einstellen.

Die Stromzuführung zur Gasdiffusionselektrode kann nach im Prinzip bekannten Anordnungen erfolgen. Bevorzugt ist eine Anordnung der Stromzuführung über die Haltevorrichtung der Gasdiffusionselektrode, welche wiederum niederohmig mit der Rückseite der Elektrolysezelle zu einer externen Stromquelle verbunden ist, wobei an der Haltevorrichtung eine zusätzliche metallische Gitterstruktur angebracht ist, an der je nach Differenzdruck zwischen Elektrolytseite und Gasseite gasseitig oder elektrolyseitig die Gasdiffusionselektrode anliegt, und die für kurze Stromwege sorgt. Für den Fall einer Gasdiffusionselektrode mit integriertem metallischem Gitter kann gegebenenfalls auf die gesonderte metallische Gitterstruktur an der Haltevorrichtung verzichtet werden, wenn durch ein anderes einfaches Widerlager eine Abstützung der Diffusionselektrode in Richtung des Gasraumes gewährleistet ist.

Die Stromzuführung kann auch bevorzugt über eine niederohmige Verbindung zur Rückseite der Halbzelle erfolgen.

Eine vorteilhafte Ausführungsform der erfindungsgemäßen Halbzelle ist dadurch gekennzeichnet, daß die gesamte Struktur der Gastaschenelektrode aus der Halbzelle, z.B. einer Elektrolysehalbzelle, herausnehmbar gestaltet wird.

Die erfindungsgemäße Halbzelle läßt sich grundsätzlich in allen elektrochemischen Verfahren einsetzen, bei denen eine Gasdiffusionselektrode in unmittelbaren Kontakt mit einem flüssigen Elektrolyten betrieben wird Beispiele für Verwendung der erfindungsgemäßen Halbzelle sind folgende:
Natriumdichromatelektrolyse; dabei wird beispielsweise eine Wasserstoff-verzehrende Anode eingesetzt; die Wasserstoffproduktion an der Kathode kann dabei durch Sauerstoffreduktion an einer Sauerstoffverzehrkathode ersetzt werden;
die Wasserstoffperoxidproduktion über Sauerstoffreduktion an einer Gasdiffusionskathode;
die Anwendung für alkalische Brennstoffzellen, die z.B. zur Anreicherung von Natronlauge eingesetzt werden. Hierbei kann mit Halbzellen entsprechend der Erfindung, die als Anode zur Wasserstoffumsetzung geschaltet sind und solchen, die als Kathode zur Sauerstoffreduktion geschaltet sind, gearbeitet werden.

Mit Hilfe der erfindungsgemäßen Halbzelle lassen sich prinzipiell die üblichen marktgängigen Membranelektrolyseure zu Elektrolyse von Alkalihalogenidlösung auf den energiesparenden Betrieb mit z.B. Sauerstoffverzehrkathoden umstellen.

Dies gilt insbesondere auch für Zelltypen mit senkrechter Rippenstruktur oder senkrechten oder waagerechten Innenstrukturrippen.

Für die Anwendung in der erfindungsgemäßen Halbzelle können alle grundsätzlich bekannten Typen von Gasdiffusionselektroden eingesetzt werden, z.B. Typen mit integrierten metallischen Stütz- bzw. Stromverteilergittern oder auf Kohlenstofffliesen oder sonstigen leitfähigen Strukturen aufgebaute Elektroden.

Die Erfindung wird nachstehend anhand der Figuren beispielhaft näher erläutert, ohne die Erfindung im einzelnen einzuschränken.

In den Figuren zeigen:
- Figur 1: einen Längsschnitt entsprechend der Linie A-A' in Figur 2a durch eine erfindungsgemäße Halbzelle, ausgeführt als Sauerstoffverzehrkathode, gezeichnet mit Blick auf die Rückseite der Diffusionselektrodenfläche,
- Figur 2a: einen Querschnitt durch die Halbzelle nach Figur 1 entsprechend der Linie B-B' in Figur 1.
- Figur 2b: ein Schema zur Erläuterung des Differenzdrucks auf der Diffusionselektrode
- Fig. 3: das vergrößerte Detail eines Teiles der erfindungsgemäßen Halbzelle nach Fig. 1
- Figur 4: einen Längsschnitt durch eine Variante der Halbzelle mit Drosselbohrungen zwischen den Gastaschen.

### Beispiele

### Beispiel 1

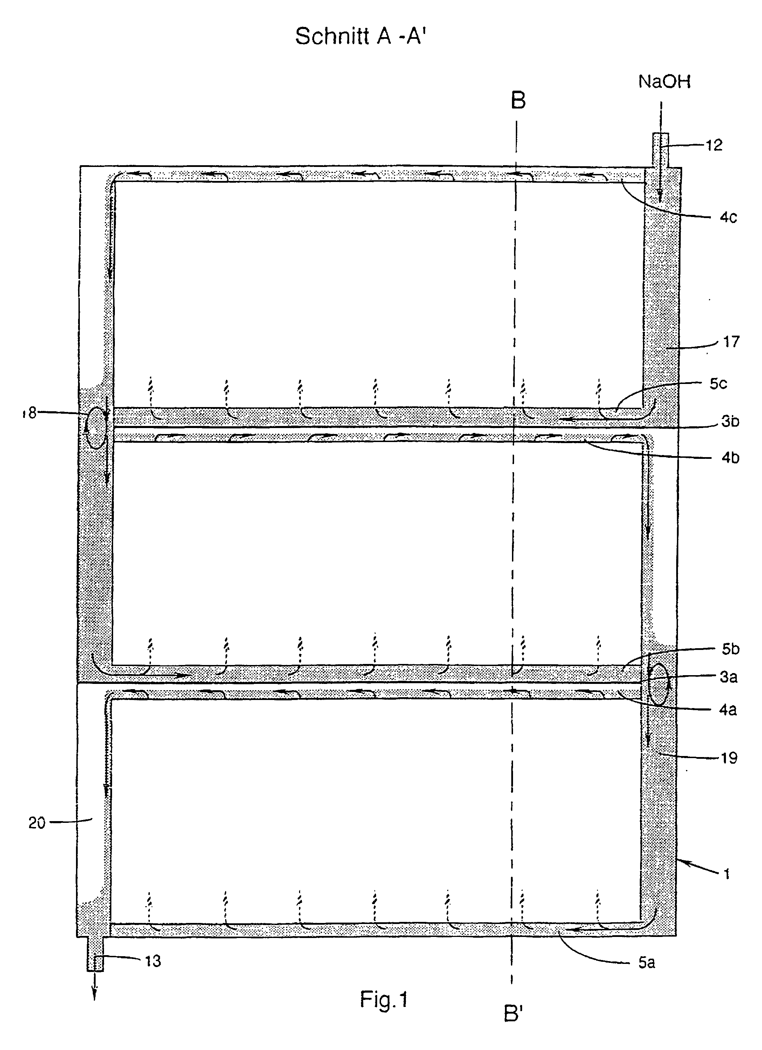

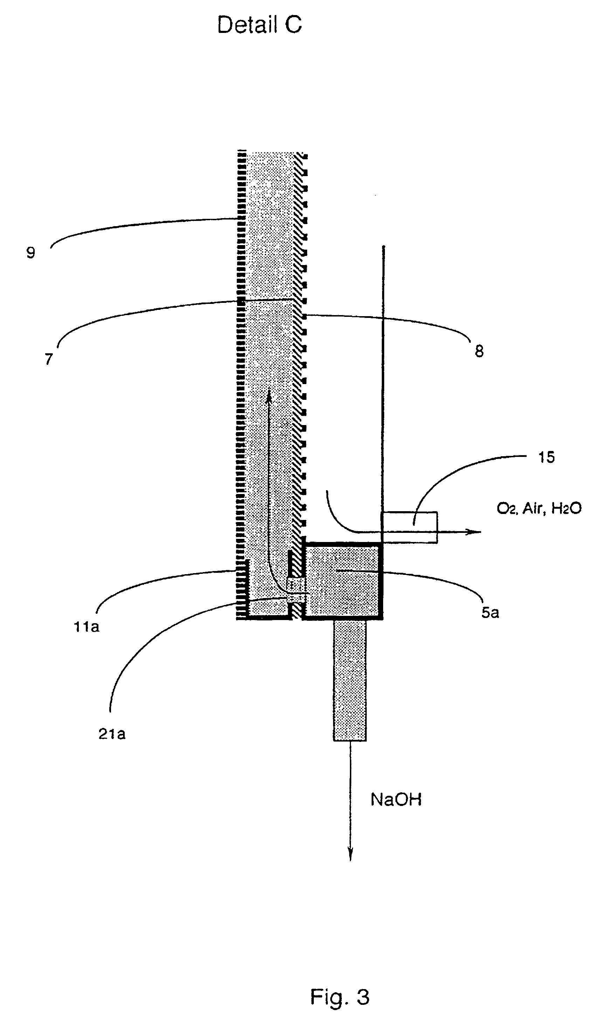

Eine als Sauerstoffverzehrkathode geschaltete elektrochemische Halbzelle 1 ist in den Figuren 1, 2a und 3 wiedergegeben und wird wie folgt betrieben:

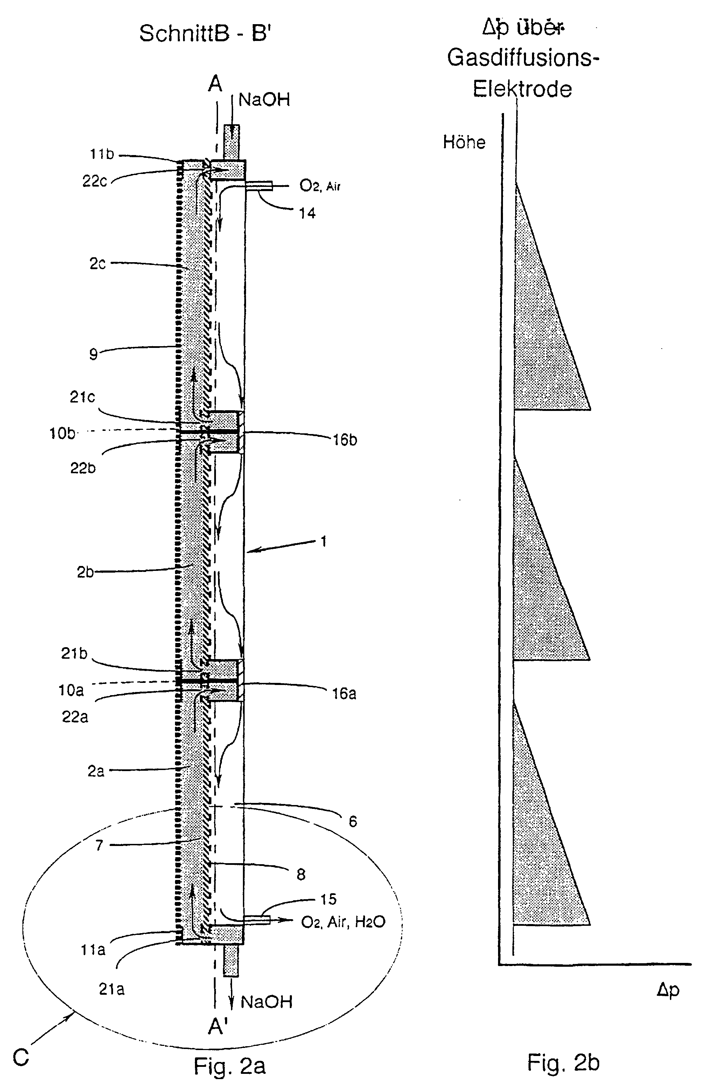

Der Elektrolyt 23 tritt durch den Elektrolytzulauf-Stutzen 12 in die Halbzelle 1 speziell in den Fallschacht 17 ein. Der Elektrolyt 23 fließt weiter durch den horizontalen Verteiler 5c über die Bohrungen 21c, in das Abteil 2c des Elektrodenraumes 2 und steigt gleichmäßig im Abteil 2c auf. Der Elektrolyt 23 verläßt das Abteil 2c über die Öffungen 22c (siehe Fig. 2a) in den horizontalen Sammler 4c und fließt nach dem Überlaufprinzip über den Fallschacht 18 ab, der mit dem Verteiler 5b verbunden ist. In der gleichen Weise fließt der Elektrolyt 23 jeweils weiter über die Fallschächte 19 bzw. 20, die Verteiler 5a bzw. 5b mit den Austrittsöffnungen 21a bzw. 21b, die Abteile 2a bzw. 2b, die Abflußöffnungen 22a bzw. 22b und die oberen Sammler 4a bzw. 4b bis schließlich der Elektrolyt die Halbzelle über den Elektrolytablauf-Stutzen 13 im Fallschacht 20 verläßt.

Das Reaktionsgas z.B. Sauerstoff tritt über den Stutzen 14 in den Gasraum 6 ein. Die Gastransportkanäle 16a und 16b sorgen für eine gleichmäßige Gasversorgung im gesamten Gasraum 6. Überschüssiges Reaktionsgas zusammen mit eventuellen Kondensaten verläßt die Halbzelle 1 über den Gasauslaß-Stutzen 15.

Die Trennschiene 3a und 3b zwischen den Sammlern und Verteilern sowie die Stützelemente 10a und 10b zwischen den Segmenten trennen diese hydraulisch voneinander. Die Stützelemente 10a und 10b sowie die Randelemente 11a und 11b definieren einerseits den Spalt des Elektrodenraumes 2 zwischen IonenaustauscherMembran 9 und Gasdiffusionskathode 7 und pressen letztere gegen die Sammler-Verteilerkanäle, um die Gasdiffusionskathode 7 hiergegen abzudichten und gleichzeitig elektrisch zu kontaktieren.

Die Summe der Querschnitte der Austrittsöffnungen 21a bis 21c ist in ihrer Gesamtfläche kleiner als der Querschnitt der Verteilerkanäle 5a bis 5c, um ein gleichmäßiges Einströmen des Elektrolyten 23 in die Abteile 2a bis 2c zu gewährleisten. Andererseits sollten die Austrittsöffnungen 22a bis 22c in die Sammler groß genug sein, um ein Hängenbleiben eventuell mitgeführter Gasblasen vor diesen Öffnungen zu vermeiden. Die Bespeisung der Halbzelle mit Elektrolyt 23 erfolgt wahlweise über Zulauf mit entsprechender geodätischer Höhe oder über Zwangsdurchlauf. Insbesondere im letzteren Fall ist es sinnvoll, die Anzahl oder den Querschnitt der Öffnungen 21c in die obere Kammer soweit zu verringern, daß schädlicher Staudruck auf die Gasdiffusionselektrode im obersten Abteil 2c und in den weiteren Kaskaden vermieden wird. Aus diesem Grund kann es vorteilhaft sein, die Anzahl oder den Querschnitt der Öffnungen von Abteil zu Abteil, beginnend mit Abteil 2c, zunehmen zu lassen. Sollten Gasblasen in den Katholytspalt gelangt sein, koagulieren diese zunächst im oberen Sammler und werden bei ausreichend hoher Strömungsgeschwindigkeit über den Fallschacht 4c nach unten mitgerissen, in das nächste Abteil 2b eingespeist und schließlich über das letzte Abteil ausgeschleust. Alternativ kann bei Konzepten mit kleiner Strömungsgeschwindigkeit an jeden Sammler 4a bis 4c eine Entlüftung (hier nicht dargestellt) angebracht werden, die entsprechend in den Gasraum mündet. In diesem Fall muß der Reaktionsgasdruck an den hydraulischen Druck im Bereich der Sammler angepaßt werden, während bei der dynamischen Variante der Sauerstoffdruck im Rahmen der Toleranzen der Gasdiffusionselektrode frei gewählt wird. In Fig. 2b ist die Verteilung der Differenzdrücke über die einzelnen Segmente der Halbzelle dargestellt. Wesentlich ist, daß wegen der freien Abflüsse über die Faltschächte der Absolutdruck unabhängig von der Höhenlage derjweiligen Segmente ist.

### Beispiel 2

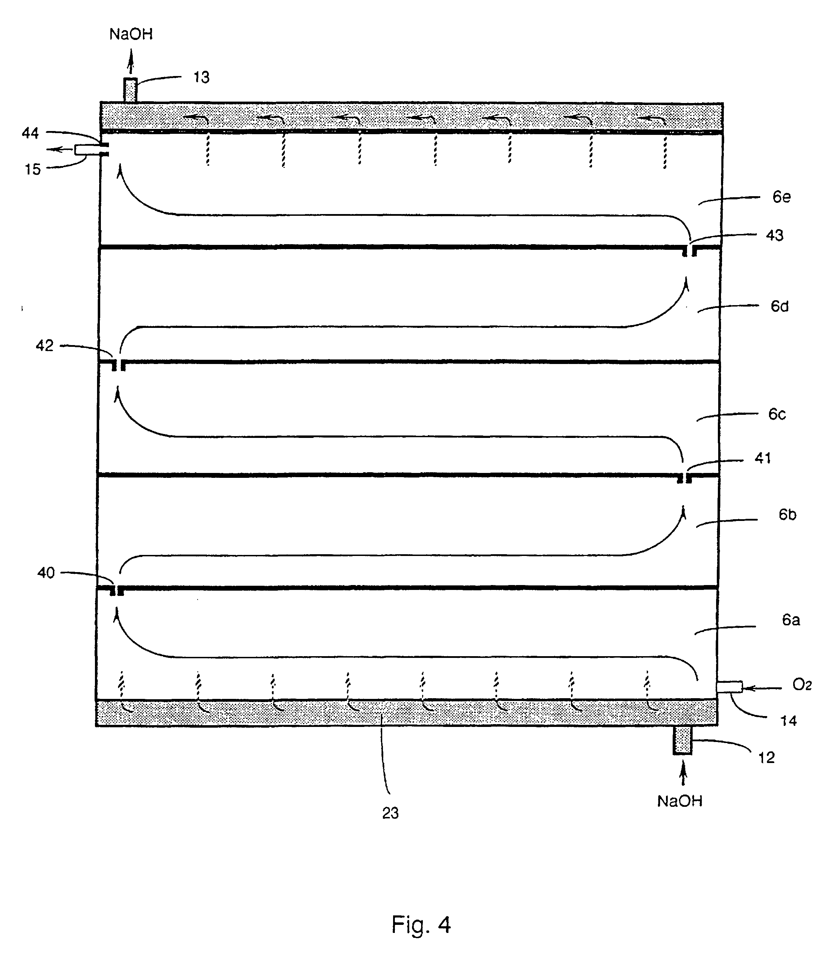

In Fig. 4 ist das Prinzip des kaskadenartigen Druckabbaus anhand einer Halbzelle mit fünf übereinander angeordneten Gastaschen 6a bis 6e dargestellt. Das Reaktionsgas tritt mit einem Vordruck von 1560 mm WS über den Stutzen 14 in die Kammer 6a ein, verläßt diese verringert um die verbrauchte Menge von 0,12 m³/h durch die Drossel 40, tritt mit einem 313 mm WS niedrigeren Druck in die Kammer 6b ein und verläßt diese durch die Drossel 41 wiederum um die verbrauchte Menge von 0,12 m³/h usw. bis das Überschußgas von 0,4m³/h die Kammer 6e durch die Drossel 44 verläßt.

Der Elektrodenraum 2 ist bei dieser Ausführung der Erfindung durchgehend, wobei die Bespeisung mit Elektrolyt über Stutzen 12 von unten entspr. Fig. 4 erfolgt. Die Abströmung oben (hier nicht dargestellt) verläuft nach Fig. 4 über einen entsprechenden Sammler.

Bei einer Zelle mit einer Höhe von 1,2 m und 0,8 m Breite ergeben sich bei 5 Segmenten für 32 %ige Natronlauge 312 mm WS (Wassersäule) hydrostatischer Druckerhöhung pro Stufe, die kompensiert werden muß. Der Nettoverbrauch an Sauerstoff beträgt bei einer Leistungsdichte von 3 kA/m² 0,6 m³/h, d.h. 0,12 m³/h pro Segement. Bei einer Einspeisemenge von 1 m³/h haben die Drosselbohrungen von unten nach oben folgenden Durchmesser:

| | | |
|---|---|---|
| Drossel 44 | Ausgang Gastasche 6e | 2,3 mm |
| Drossel 53 | Ausgang Gastasche 6d | 2,1 mm |
| Drossel 42 | Ausgang Gastasche 6c | 1,9 mm |
| Drossel 41 | Ausgang Gastasche 6b | 1,7 mm |
| Drossel 40 | Ausgang Gastasche 6a | 1,5 mm |

Die Auslaufhöhe der Natronlauge befindet sich in Höhe der Zell-Oberkante

## Patentansprüche

1. Elektrochemische Halbzelle (1) bestehend aus einem Elektrodenraum (2) zur Aufnahme eines Elektrolyten (23), einem Gasraum (6), und mindestens einer Gasraum (6) und Elektrodenraum (2) trennenden Gasdiffusionselektrode (7) als Kathode oder Anode, **dadurch gekennzeichnet, daß** der Elektrodenraum (2) in Abteile (2a, 2b, 2c) aufgeteilt ist, die zur Durchleitung des Elektrolyten (23) kaskadenartig über Fallschächte (17), (18), (19) miteinander verbunden sind.

2. Elektrochemische Halbzelle nach Anspruch 1, **dadurch gekennzeichnet, daß** der Elektrolyt (23) in den Abteilen (2a, 2b, 2c) des Elektrodenraumes (2) aufwärts strömt.

3. Elektrochemische Halbzelle nach Anspruch 1 oder 2, **dadurch gekennzeichnet, daß** die Abteile (2a, 2b, 2c) Eintrittsöffnungen (21a, 21b, 21c) für den Elektrolyten (23) aufweisen, die in dem Bereich des jeweiligen Abteilbodens angebracht sind.

4. Elektrochemische Halbzelle nach den Ansprüchen 1 bis 3, **dadurch gekennzeichnet, daß** die Abteile (2a, 2b, 2c) Austrittsöffnungen (22a, 22b, 22c) für den Elektrolyten (23) aufweisen, die im Bereich des Abteildeckels angebracht sind und in ihrer Gesamtfläche größer als die Eintrittsöffnungen sind.

5. Elektrochemische Halbzelle nach Ansprüchen 1 bis 4, **dadurch gekennzeichnet, daß** der Elektrolytzulauf(12) zur Halbzelle am obersten Abteil (2c) angebracht ist.

6. Elektrochemische Halbzelle nach den Ansprüchen 1 bis 5, **dadurch gekennzeichnet, daß** der Gasraum (6) in mehrere, insbesondere eine der Zahl der Abteile (2a, 2b, 2c) entsprechende Zahl übereinander liegender Gastaschen (6a, 6b, 6c) aufgeteilt ist, die gasseitig miteinander verbunden sind, ohne unmittelbaren Kontakt zum Elektrolyten zu haben.

7. Elektrochemische Halbzelle nach den Ansprüchen 1 bis 6, **dadurch gekennzeichnet**, der Gasdruck im Gasraum (6), insbesondere in den Gastaschen (6a, 6b, 6c) unabhängig vom Elektrolytdruck einstellbar ist, ohne daß die Druckkompensation beeinflußt wird.

8. Elektrochemische Halbzelle, insbesondere nach Anspruch 1, bestehend aus einem Elektrodenraum (2) zur Aufnahme eines Elektrolyten (23), einem Gasraum (6), und mindestens einer Gasraum (6) und Elektrodenraum (2) trennenden Gasdiffusionselektrode (7) als Kathode oder Anode, wobei der Gasraum (6) in zwei oder mehrere übereinanderliegende Gastaschen (6a, 6b, 6c) aufgeteilt ist, **dadurch gekennzeichnet, daß** die Gastaschen (6a, 6b, 6c) zur Einstellung eines dem Druck vor der Gasdiffusionselektrode (7) entsprechenden Differenzdrucks über Drosselbohrungen (40, 41, 42) mit einander verbunden sind, und die Gaszuleitung (14) an der untersten Gastasche (6a) angebracht ist.

## Claims

1. Electrochemical half-cell (1) comprising an electrode chamber (2) for the accommodation of an electrolyte (23), a gas chamber (6), and at least one gas diffusion electrode (7) which separates the gas chamber (6) and the electrode chamber (2) and serves as cathode or anode, **characterized in that** the electrode chamber (2) is divided into compartments (2a, 2b, 2c) which, for the passage of the electrolyte (23), are connected to one another in cascade fashion via chutes (17), (18), (19).

2. Electrochemical half-cell according to Claim 1, **characterized in that** the electrolyte (23) flows upwards in the compartments (2a, 2b, 2c) of the electrode chamber (2).

3. Electrochemical half-cell according to Claim 1 or 2, **characterized in that** the compartments (2a, 2b, 2c) have inlet openings (21a, 21b, 21c) for the electrolyte (23), which openings are arranged in the region of the respective compartment base.

4. Electrochemical half-cell according to Claims 1 to 3, **characterized in that** the compartments (2a, 2b, 2c) have outlet openings (22a, 22b, 22c) for the electrolyte (23), said openings being arranged in the region of the top of the compartment and their overall area being greater than that of the inlet openings.

5. Electrochemical half-cell according to Claims 1 to 4, **characterized in that** the electrolyte inlet pipe (12) into the half-cell is arranged in the uppermost compartment (2c).

6. Electrochemical half-cell according to Claims 1 to 5, **characterized in that** the gas chamber (6) is divided into a plurality of gas pockets (6a, 6b, 6c) which are arranged one above another and which correspond in number in particular to the number of the compartments (2a, 2b, 2c), said gas pockets being connected to one another on the gas side without having direct contact with the electrolyte.

7. Electrochemical half-cell according to Claims 1 to 6, **characterized in that** the gas pressure in the gas chamber (6), in particular in the gas pockets (6a, 6b, 6c), is adjustable independently of the electrolytic pressure without the pressure compensation being affected.

8. Electrochemical half-cell, in particular according to Claim 1, comprising an electrode chamber (2) for the accommodation of an electrolyte (23), a gas chamber (6), and at least one gas diffusion electrode (7) which separates the gas chamber (6) and the electrode chamber (2) and serves as cathode or anode, wherein the gas chamber (6) is divided into two or more gas pockets (6a, 6b, 6c) arranged one above another, **characterized in that** for the adjustment of a differential pressure corresponding to the pressure upstream of the gas diffusion electrode (7) the gas pockets (6a, 6b, 6c) are connected to one another via throttling bores (40, 41, 42) and the gas supply pipe (14) is arranged in the lowest gas pocket (6a).

## Revendications

1. Demi-cellule électrochimique (1) constituée d'un espace d'électrode (2) pour la réception d'un électrolyte (23), d'un espace de gaz (6) et d'au moins une électrode à diffusion de gaz (7) séparant l'espace de gaz (6) et l'espace d'électrode (2) comme cathode ou anode, **caractérisée en ce que** l'espace d'électrode (2) est divisé en compartiments (2a, 2b, 2c), lesquels sont reliés ensemble par l'intermédiaire de puits de chute (17), (18), (19) à la manière d'une cascade pour le passage de l'électrolyte (23).

2. Demi-cellule électrochimique selon la revendication 1, **caractérisée en ce que** l'électrolyte (23) s'écoule vers le haut dans les compartiments (2a, 2b, 2c) de l'espace d'électrode (2).

3. Demi-cellule électrochimique selon la revendication 1 ou 2, **caractérisée en ce que** les compartiments (2a, 2b, 2c) présentent des ouvertures d'entrée (21a, 21b, 21c) pour l'électrolyte (23), lesquelles sont appliquées dans le domaine du fond du compartiment correspondant.

4. Demi-cellule électrochimique selon les revendications 1 à 3, **caractérisée en ce que** les compartiments (2a, 2b, 2c) présentent des ouvertures de sortie (22a, 22b, 22c) pour l'électrolyte (23), lesquelles sont appliquées dans le domaine du couvercle du compartiment et sont dans leur surface globale plus grandes que les ouvertures d'entrée.

5. Demi-cellule électrochimique selon les revendications 1 à 4, **caractérisée en ce que** l'entrée d'électrolyte (12) dans la demi-cellule est appliquée sur le compartiment supérieur (2c).

6. Demi-cellule électrochimique selon les revendications 1 à 5, **caractérisée en ce que** l'espace de gaz (6) est divisé en plusieurs, en particulier en un nombre correspondant au nombre des compartiments (2a, 2b, 2c), poches de gaz (6a, 6b, 6c) disposées les unes au-dessus des autres, lesquelles sont reliées ensemble sur le côté du gaz, sans être en contact direct avec l'électrolyte.

7. Demi-cellule électrochimique selon les revendications 1 à 6, **caractérisée en ce que** la pression de gaz dans l'espace de gaz (6), en particulier dans les poches de gaz (6a, 6b, 6c) peut être ajustée indépendamment de la pression d'électrolyte, sans influencer la compensation de pression.

8. Demi-cellule électrochimique, en particulier selon la revendication 1, constituée d'un espace d'électrode (2) pour la réception d'un électrolyte (23), d'un espace de gaz (6), et d'au moins une électrode à diffusion de gaz (7) séparant l'espace de gaz (6) et l'espace d'électrode (2) comme cathode ou anode, l'espace de gaz (6) étant divisé en deux ou plusieurs poches de gaz disposées les unes au-dessus des autres (6a, 6b, 6c), **caractérisée en ce que** les poches de gaz (6a, 6b, 6c) sont reliées ensemble pour ajuster une pression différentielle correspondant à la pression avant l'électrode à diffusion de gaz (7) par l'intermédiaire d'orifices d'étranglement (40, 41, 42), et la canalisation d'introduction de gaz (14) est appliquée sur la poche de gaz inférieure (6a).
